Europäisches Patentamt

European Patent Office

Office européen des brevets

(19)

(11) **EP 0 519 284 B1**

(12) **EUROPÄISCHE PATENTSCHRIFT**

(45) Veröffentlichungstag und Bekanntmachung des Hinweises auf die Patenterteilung:
**07.02.1996 Patentblatt 1996/06**

(51) Int Cl.6: **H01B 13/02**, G02B 6/44

(21) Anmeldenummer: **92109585.7**

(22) Anmeldetag: **05.06.1992**

(54) **Verfahren und Einrichtung zur Verseilung von Leitern mit wechselnder Schlagrichtung**

Method and apparatus for stranding conductors with reversing direction of lay

Procédé et dispositif de câblage de conducteurs à sens alterné

(84) Benannte Vertragsstaaten:
**AT BE CH DE ES FR GB GR IT LI NL SE**

(30) Priorität: **17.06.1991 DE 4119923**

(43) Veröffentlichungstag der Anmeldung:
**23.12.1992 Patentblatt 1992/52**

(73) Patentinhaber:
**SIEMENS AKTIENGESELLSCHAFT
D-80333 München (DE)**

(72) Erfinder:
• **Oestreich, Ulrich
W-8000 München 70 (DE)**
• **Schneider, Reiner
W-8624 Ebersdorf (DE)**

(56) Entgegenhaltungen:
EP-A- 0 066 800          DE-A- 3 419 594
DE-A- 3 419 594          DE-C- 682 267
US-A- 4 590 755

## Beschreibung

Die Erfindung betrifft ein Verfahren zur Verseilung von elektrischen und/oder optischen Leitern mit wechselnder Schlagrichtung (SZ-Verseilung) unter Verwendung eines langgestreckten, mit wechselnder Drehrichtung betriebenen zylindrischen Körpers, der von den Leitern umschlungen wird, die endseitig einer Verseilscheibe zugeführt werden, wobei der zylindrische Körper endseitig während des Verseilvorganges unter Zugspannung gehalten wird.

Ein Verfahren dieser Art ist aus der DE 34 19 594 A1 bekannt. Dort ist ein mit einer Verseilscheibe verbundener Rohrspeicher zur Veränderung seiner Eigenfrequenz in axialer Richtung spannbar. Dazu ist er an seinem der Verseilscheibe abgewandten Ende in einem Antriebsgehäuse drehbar eingespannt, das mit einem Schlitten axial verschiebbar ist. An seinem anderen Ende ist die Verseilscheibe des Rohrspeichers drehbar in einem Lager gehalten.

Ein weiteres Beispiel für die Ausführungsform eines derartigen Rohrspeichers ist der EP 0 158 730 zu entnehmen. Die Rohre sind dabei endseitig leicht drehbar gelagert und werden über entsprechende Antriebseinrichtungen in eine Rotation mit wechselnder Umdrehungsrichtung versetzt.

Der Nachteil der Arbeitsweise dieser bekannten Rohrspeicher ist die sehr begrenzte Schlagzahl, welche beim fertigen Produkt zwischen zwei Umkehrstellen liegt. Verantwortlich hierfür sind die bei größerer Schlagzahl zu groß werdenden Reibungskräfte zwischen dem Rohrspeicher einerseits und der Außenwand der Leiter andererseits, weil sich die Umschlingungswinkel aufaddieren. Weiterhin ist bei diesen bekannten Rohrspeichern darauf zu achten, daß es zu keinen Schwingungen oder radialen Auslenkungen kommt. Auch ist die Verwendung von Rohren größerer Länge problematisch, weshalb hierbei Zwischen-Abstützungen (zusätzlich zu Endlagern) vorgesehen wurden, was aber voraussetzt, daß im Bereich der Abstützung eine entsprechende Führungsscheibe für die Adern vorgesehen wird und somit zur Folge hat, daß in diesem Bereich die Adern von der Oberfläche des Rohres abgehoben werden müssen.

Der Erfindung liegt die Aufgabe zugrunde bei einem Verfahren der eingangs genannten Art einen Weg aufzuzeigen, auf dem die Einschränkungen, welche die Verwendung von Rohrspeichern herkömmlicher Bauart begrenzen, vermieden werden können. Gemäß der Erfindung wird diese Aufgabe bei einem Verfahren der eingangs genannten Art dadurch gelöst, daß als zylindrischer Körper ein Draht oder Seil verwendet wird, daß der zylindrische Körper beidseitig mit Antrieben angetrieben wird, und daß diese endseitigen Antriebe mit unterschiedlicher Drehzahl betrieben werden, so daß der zylindrische Körper als Torsionsfeder betrieben und die Reversierung der Verseilscheibe durch die Federtorsion beschleunigt wird.

Das zylindrische Element ist bei der Erfindung nicht mehr nur ein endseitig mit z.B. Rollenlagen gelagertes Rohr wie beim Stand der Technik, sondern ein Seil oder Draht, d.h. ein Element, das für sich keine oder eine zu geringe Biegesteifigkeit aufweist. Damit bieten sich viele und neuartige konstruktive Möglichkeiten, wobei zusätzlich die bei Rohrspeichern herkömmlicher Bauart, d.h. mit starren zylindrischen Körpern arbeitenden Verseilverfahren, vorliegenden Beschränkungen hinsichtlich der Baulänge usw. völlig aufgehoben sind. So kann beispielsweise mit geringen Trägheitsmomenten gearbeitet werden. Dadurch, daß die an den gegenüberliegenden Enden des zylindrischen Körpers angeordneten Antriebe jeweils gleichzeitig reversiert sowie mit unterschiedlichen Drehzahlen betrieben werden, ist eine Tordierung des zylindrischen Körpers erzeugbar, d.h. das Seil oder der Draht wird als Torsionsfeder betrieben, durch deren Rückfederungskraft der Reversionsvorgang der Verseilscheibe beschleunigt wird. Dabei ist das Seil oder der Draht unter Zugspannung gehalten, so daß Auslenkungen in radialer Richtung weitgehend vermieden werden.

Die Erfindung betrifft weiterhin eine Einrichtung zur Durchführung des Verfahrens, wobei der zylindrische Körper an beiden Enden in axialer Richtung unverschiebbar jedoch rotierbar gelagert ist, und wobei mindestens an einem Ende Mittel zur Erzeugung einer axialen Vorspannung vorgesehen sind, welche dadurch gekennzeichnet ist, daß der zylindrische Körper aus einem Draht oder Seil besteht und daß für den zylindrischen Körper beidseitig Antriebe vorgesehen sind, die den zylindrischen Körper taktgleich mit unterschiedlichen Drehzahlen antreiben, so daß für den zylindrischen Körper eine Torsion bewirkt und die Reversierung der Verseilscheibe beschleunigt ist.

Sonstige Weiterbildungen der Erfindung sind in Unteransprüchen wiedergegeben.

Die Erfindung und ihre Weiterbildungen werden nachfolgend anhand von Zeichnungen näher erläutert. Es zeigen:

Fig. 1     in schematischer Darstellung eine Einrichtung zur Durchführung des erfindungsgemäßen Verfahrens und

Fig. 2     ein Zeitdiagramm für die Einrichtung nach Fig. 1.

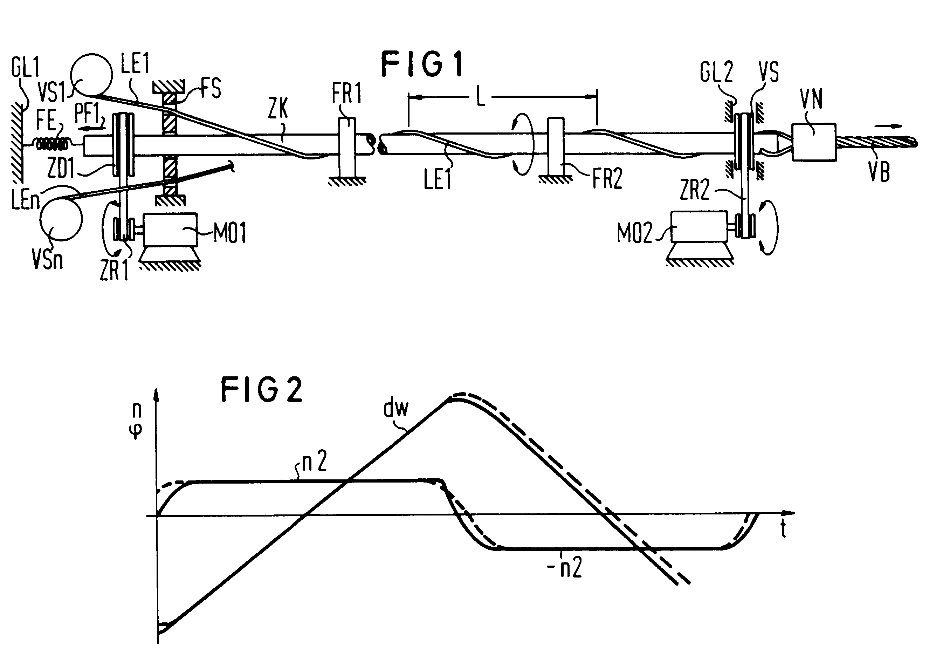

In Fig. 1 sind mehrere Vorratsspulen vorgesehen, wobei von den insgesamt n Spulen nur zwei, nämlich die Vorratsspulen VS1 und VSn dargestellt sind. Diese Vorratsspulen enthalten elektrische und/oder optische Leiter (Adern), die über entsprechende Abzugseinrichtungen einer feststehenden Führungsscheibe FS zugeführt werden. Diese Führungsscheibe FS ist mit einer Reihe von über den Umfang verteilten Bohrungen versehen (in der Art eines Lochkranzes), wobei die Bohrungen als Führungen für die jeweiligen Leiter LE1 bis LEn dienen, die miteinander verseilt werden sollen. In der Praxis ist eine größere Anzahl, z.B. n = 4 bis n = 20 oder mehr derartiger Leiter oder Adern vorgesehen.

Die Verseilung erfolgt durch einen zylindrischen Körper ZK, der in wechselnde Drehrichtung versetzt wird (SZ-Verseilung), wodurch es zu einer Umschlingung der Leiterelemente auf dem zylindrischen Körper ZK kommt. Der zylindrische Körper ZK ist drehbar in der feststehenden Führungsscheibe FS gelagert. Natürlich können auch weitere hier nicht dargestellte Lager vorgesehen sein. Der Einfachheit halber ist im Verlauf des zylindrischen Körpers ZK nur noch das Leiterelement LE1 dargestellt; für die anderen Leiterelemente gilt natürlich sinngemäß die selbe Art von Umschlingung.

Am Ende des zylindrischen Körpers ZK ist eine Verseilscheibe VS vorgesehen, die ebenfalls einer Rotationsbewegung unterworfen wird, wobei im vorliegenden Beispiel angenommen ist, daß die Verseilscheibe VS und der zylindrische Körper ZK bezüglich ihrer Rotation völlig synchron zueinander verlaufen. Zu diesem Zweck ist die Verseilscheibe VS endseitig fest mit dem zylindrischen Körper ZK verbunden und beide werden über einen Motor MO2 mittels eines Zahnriemens ZR2 gemeinsam angetrieben. Die Verseilscheibe VS weist eine Reihe von Bohrungen (Lochkranz) auf, in denen die Leiter geführt sind. Nach dem Verlassen des zylindrischen Körpers ZK gelangen die Verseilelemente zu einem Verseilnippel VN und das so entstehende verseilte Bündel VB wird weiteren hier nicht dargestellten Verarbeitungseinrichtungen, wie z.B. Einrichtungen zur Aufbringung einer Haltewendel, weiteren Verseileinrichtungen, und einem Extruder zur Aufbringung eines Außenmantels zugeführt.

Im Bereich der Führungsscheibe FS kann ein weiterer Antriebsmotor MO1 vorgesehen sein, der über einen Zahnriemen ZR1 ein Zahnrad ZD1 antreibt, das ebenfalls (d.h. wie das Zahnrad ZE2 am rechten Ende) fest mit dem zylindrischen Körper ZK verbunden ist.

Wesentlich bei der Erfindung ist, daß der zylindrische Körper ZK unter einer axialen Zugspannung PF1 gehalten wird. Die Erzeugung der Zugspannung PF1 ist schematisch angedeutet durch die vorgespannte Feder FE, welche ihre Zugkraft auf den zylindrischen Körper ZK überträgt und an ihrem äußeren Ende fest oder drehbar in einem Gegenlager GL1 gehalten ist. Zur Erzeugung der Zugspannung kann z.B. auch am linken Ende des zylindrischen Körpers ZK z.B. ein Gelenk oder ein Drucklager angebracht werden, das durch axiale Bewegung den zylindrischen Körper ZK axial vorspannt. Am anderen Ende ist im Bereich z.B. der Verseilscheibe VS ein Gegenlager GL2 vorgesehen, das in einfachster Weise dadurch realisiert werden kann, daß sich die Verseilscheibe VS in ihrem Außenbereich über Gleitlager gegen einen ortsfesten Lagerbock abstützt. Dadurch kann ein durchgehender axialer Zug auf den zylindrischen Körper ZK ausgeübt werden, der diesen unter entsprechender axialer Vorspannung hält.

Dieser axiale Zug kann einstellbar gehalten werden, z.B. durch entsprechende Auslegung der Axiallager und - insbesondere bei nichtsynchronen Antrieb der beiden Motoren - unter torsionaler Spannung. Der Speicher in Form des zylindrischen Körpers ZK wirkt dabei selbst als Feder.

Die Verwendung eines derart axial unter Zugspannung stehenden zylindrischen Körpers ZK bietet folgende Vorteile:

1.  Auch bei größerer Länge des zylindrischen Körpers ZK wird die durch die Rotationsbewegung und die Durchbiegung des zylindrischen Körpers ZK sich gegebenenfalls einstellende radiale Auslenkung verringert. Es ist dadurch z.B. möglich, entweder zylindrische Körper mit wesentlich größerer Baulänge zu realisieren ohne daß zusätzliche Abstützungen im Mittelbereich notwendig werden.

2.  Das Trägheitsmoment bzw. der Durchmesser des zylindrischen Körpers ZK kann freier gestalten werden, weil durch die axiale Vorspannung nicht mehr nur ein (wie z.B. bei einem Rohrspeicher herkömmlicher Bauart) jeweils endseitig drehbar gelagertes Rohr vorliegt, sondern eine Streckung des zylindrischen Körpers ZK bewirkt wird.

3.  Es können sehr große Baulängen für den zylindrischen Körper ZK realisiert werden, weil durch die Zug-Vorspannung das Schwingungsverhalten verbessert wird.

4.  Es ist nicht mehr notwendig, mit einem Rohr als zylindrischer Körper ZK zu arbeiten; vielmehr können dafür auch Körper mit geschlossenem Querschnitt, beispielsweise Stäbe, oder sogar Seile, Drähte oder dergleichen verwendet werden, die keine Biegestabilität haben.

Die Erfindung ist mit besonderem Vorteil dort einsetzbar, wenn nur relativ wenige Leiter (Adern) mit mäßigem Durchmesser zu verseilen sind.

Dabei ist es besonders vorteilhaft, wenn der zylindrische Körper ZK als ein gespannter elastischer Draht oder ein gespanntes elastisches Seil ausgebildet wird, weil dann z.B. auf ein Gelenk am linken Ende des zylindrischen Körpers ZK verzichtet werden kann, da ein derartiges elastisches Seil im Bereich des Gegenlagers GL1 einfach fest eingespannt gehalten werden kann, wobei dieser Draht oder das Seil durch die Antriebselemente MO2 und gegebenenfalls MO1 einer reversierenden elastischen Torsion unterworfen wird. Ein derartiges zylindrisches Element kann während der Vorverseilung im Speicherbereich viele Schläge aufnehmen und durch das Abrollen der Adern auf seinem Umfang für eine weitestgehende Rückdrehung sorgen. Er kann auch, da er je Schlag eine Drehung zu machen hat, bei fester Einspannung am einlaufseitigen Ende als Torsionsfeder wirken und dadurch die Reversierung der Verseilscheibe VS beschleunigen. Als Material für derartige draht-oder seilförmige zylindrische Körper ZK kommen insbesondere Federstahl (-Drähte), Feder-Edelstahl, eloxiertes Aldrey, Glasfaser-Harz-Verbundelemente, Kohlenstoff-Faser-Harz-Verbundelemente oder ähnliche Aufbauten in Frage. Wesentlich ist, daß sie gut elastisch tordierbar sind und eine entsprechende Rückfederungs-Kraft erzeugen. Die Dimensionierung erfolgt nach der Torsionsbegrenzung des Speicherdrahtes und dem bei voller Besetzung des Speichers ZK resultierenden Umschlingungswinkel. Die durch die Torsion und die Zugkraft gebildete Gesamtspannung darf nicht über das Produkt E zul hinausgehen. Je nach Material ist Ezul ca. $7 \cdot 10^{-3}$ (Federstahl), $5 \cdot 10^{-3}$ (hochfester Stahl), $3 \cdot 10^{-3}$ Aldrey oder $1 \cdot 10^{-2}$ (GFK oder CFK).

Bei z.B. federnder Einspannung oder Verwendung zusätzlicher Torsionselemente am linken Ende kann auch ein fester (z.B. rohrförmiger) zylindrischer Körper einer Torsion unterworfen und dabei eine Rückfederungs-Kraft erzeugt werden.

Zur Erläuterung der Verhältnisse wird nachfolgend auf ein Zahlenbeispiel Bezug genommen, wobei das zylindrische Element ZK als Draht aus Federstahl hergestellt sein soll, der einen Außendurchmesser von 2 mm hat und mit dem eine Verseilung von 3 bis 5 Leitern (Adern) von etwa 2 mm Durchmesser durchgeführt werden soll. Die axiale Vorspannung des zylindrischen Körpers ZK wird zweckmäßig in einem Bereich zwischen $0,1 \cdot 10^{-3}$ und $2 \cdot 10^{-3}$ gewählt. Unter der Voraussetzung einer zulässigen Torsionsdehnung von z.B. $\varepsilon = 5 \cdot 10^{-3}$ gilt bei reiner Torsion.

$$\varepsilon = \frac{\tau}{E} = \frac{G}{E} \cdot R \cdot \vartheta \, ,$$

G = Schermodul        E = E-Modul

R = Speicherradius = 1 mm

$\tau$ = Torsionsspannung $\vartheta$ = Torsionswinkel (im Bogenmaß

Für übliche Werkstoffe ist

$$\frac{G}{E} \sim 0,3,$$

also

$$\vartheta = \frac{\varepsilon}{0,3} \cdot \frac{1}{R} = \frac{5 \cdot 10^{-3}}{0,3} \approx 1,5 \cdot 10^{-2} = \frac{2\pi}{L} \, ,$$

$$L = \text{kürzeste Torsions-Periodenlänge} = \frac{2\pi}{1,5 \cdot 10^{-2}} \approx 420 \text{ mm.}$$

Bei überlagerter axialer Vorspannung ist die Hauptspannung zu berechnen und als kritisch zu betrachten. Dann wird auch die $2\pi$-Torsionslänge größer.

30 Perioden (für 60 Schläge) verlangen eine aktive Speicherlänge von mindestens 30 x 0,42 = 12,6 m. Eine Speicherdrahtlänge von 15 m ist empfehlenswert.

Der Verseilwinkel $\alpha$ auf dem vollbesetzten Speicher wäre

$$\text{bei } L = 420 : \alpha = \text{arc tan} \frac{L}{4R \cdot \pi} = 88,3 \,° \, ,$$

womit sich ein Wendelkrümmungsradius

$$\varphi = \frac{2R}{\cos^2 \alpha} = 2240 \text{ mm ergäbe.}$$

Der Umschlingungswinkel $\varphi$ der Wendel aus 30 Schlägen wäre

$$\varphi \approx \frac{12600}{2240} = 5,63 = 320 \,° .$$

Mit einem bei glatter, eventuell geschmierter Speicheroberfläche erreichbaren $\mu = 0,2$ wird $\mu \cdot \varphi = 1,126$, also $\exp \mu \varphi$ = 3,1. Eine feinrauhe Oberfläche (am besten eloxiertes Aluminium, d.h. Piano-Stahl, aluminisiert und eloxiert) für den zylindrischen Körper ist anzuraten. Zylindrische Körper als Speicher aus GFK oder CFK sind ebenfalls empfehlenswert.

Für eine so große Schlagzahl muß also der Speicher dem Verseilgut gut angepaßt sein.

Zweckmäßig wird das eine Ende des Speicher"drahtes" ZK fest eingespannt, während sich das andere Ende mit dem Verseilwerkzeug VS dreht. Genügende Vorspannung verhindert stärkeres Durchhängen oder Schwingen. Leichte Auswechselbarkeit ist zweckmäßig. Angetrieben wird die Verseilscheibe VS und zwar besonders zweckmäßig über eine Fliehkraft-Kupplung, die bei Unterschreiten einer Mindestdrehzahl, z.B. 500/min, auskuppelt, so daß die gespannte Torsionsfeder den Umkehrvorgang der Verseilung beschleunigt und verkürzt und die Umkehrstelle schärfer ausprägt.

Das gegebenenfalls festeingespannte linke Ende des zylindrischen Körpers ZK ist mit veränderbarer Drehzahl antreibbar, so daß (bei gleichbleibender Drehzahl der Verseilscheibe VS) verschiedene wirksame Drehzahlen des Verseilspeichers einstellbar sind. Die Drehzahl nl des Antriebsmotors MO1 kann zwischen n1 = 0 und n1 = n2 (= Drehzahl des Antriebsmotors MO2) gewählt werden.

Durch langsameres Drehen vom Antriebsmotors MO1 her (also kleinerem n1) kann die Aufseil-Konzentration am Einlaufende vermieden oder angepasst, d.h. in jedem Fall eine möglichst zweckmäßige Beseilung des Speichers erzielt werden.

Mit diesem Mittel kann auch die Verteilung der Schläge auf dem Speicher und die wirksame Rückdrehung beeinflußt werden. Die Antriebsmotoren MO1 und MO2 der beiden Enden des Speichers werden auch bei unterschiedlichen Drehzahlen n1 und n2 stets taktgleich reversiert.

Um die Verseilelemente auf dem Speicher zu halten, sind zweckmäßig in kürzeren Abständen, z.B. 0,5 m, konzentrische Führungsringe FR1, FR2 (Fig. 1) anzubringen, die ein zu starkes Abheben, vor allem aber Überschlagen der Verseilelemente verhindern. Der Innendurchmesser dieser feststehenden Führungsringe sollten etwa 10 bis 50 % größer sein als der Rotationsraum, welcher von den Verseilelementen auf dem zylindrischen Körper ZK beansprucht wird.

Die Verseilscheibe VS sollte die Elemente möglichst nicht vom Speicher abzuheben zwingen, um keine zusätzlichen Umlenkwinkel zu erzeugen und derart die Längsreibung zu vergrößern.

Bei dem Zeitdiagramm nach Fig. 2 ist dargestellt, daß (vergleiche ausgezogene Linie) die vom Antriebsmotor MO2 herrührende Drehzahl vom n2 von einem Wert in der einen Richtung periodisch auf einen Wert in der Richtung -n2 umgeschaltet wird. Ein derartiger Drehzahlverlauf bedingt einen etwa sägezahnförmigen Verlauf des Speicherwinkels dw. Die gestrichelten Linien geben jeweils den Verlauf an, wenn eine normale Reversierung stattfindet, d.h. wenn der zylindrische Körper ZK nicht als Torsionsfeder betrieben wird, sondern frei gelagert und nur in Längsrichtung vorgespannt drehen kann. Wird dagegen der zylindrische Körper ZK zusätzlich tordiert, z.B. durch einseitiges Eingespannen, z.B. im Bereich des Gegenlagers GL1 und weist er entsprechende Torsionseigenschaften auf, dann kommt es zu einem Kurvenverlauf, wie er durch die ausgezogenen Linien wiedergegeben wird. Diese beiden Drehzahl-Linien laufen unmittelbar nach einer Umkehrstelle, also z.B. bei einem Drehrichtungswechsel von n2 nach -n2 auseinander, was dazu führt, daß der Drehwinkel entsprechend der Kurve dw (vergleiche ausgezogene Linie) verringert wird und zudem die Reversion (vergleiche ausgezogene Linie beim Übergang von n2 nach -n2) steiler und schärfer einsetzt. Die Ursache dafür ist darin zu sehen, daß der Federspeicher, welcher durch den durch Torsion vorgespannten zylindrischen Körper ZK gebildet wird, das Reversieren, z.B. über die Verseilscheibe VS mit unterstützt und seine Federenergie in den Reversionsvorgang einbringt.

Der Durchmesser des zylindrischen Körpers ZK kann zweckmäßig zwischen 1 und 5 mm gewählt werden und vorteilhaft etwa bei dem Durchmesser der zu verseilenden Adern (Leiter) liegen oder etwas größer sein.

Die Kraft, mit der der zylindrische Körper ZK in axialer Richtung vorgespannt wird, sollte zwischen 100 und 10000 N gewählt werden (je nach Durchmesser, Material und Vordehnung).

Die Anzahl der Schläge, die auf dem zylindrischen Körper angebracht werden können, kann vorteilhaft zwischen 10 und 50 liegen.

**Patentansprüche**

1. Verfahren zur Verseilung von elektrischen und/oder optischen Leitern (LE1, LE2) mit wechselnder Schlagrichtung (SZ-Verseilung) unter Verwendung eines langgestreckten, mit wechselnder Drehrichtung betriebenen zylindrischen Körpers (ZK), der von den Leitern (LE1, LE2) umschlungen wird, die endseitig einer Verseilscheibe (VS) zugeführt werden, wobei der zylindrische Körper (ZK) endseitig während des Verseilvorganges unter Zugspannung gehalten wird,

   **dadurch gekennzeichnet,**
   daß als zylindrischer Körper (ZK) ein Draht oder Seil verwendet wird, daß der zylindrische Körper (ZK) beidseitig mit Antrieben (M01, M02) angetrieben wird, und daß diese endseitigen Antriebe (M01, M02) taktgleich mit unterschiedlicher Drehzahl betrieben werden, so daß der zylindrische Körper (ZK) als Torsionsfeder betrieben und die Reversierung der Verseilscheibe (VS) durch die Federtorsion beschleunigt wird.

2. Verfahren nach Anspruch 1,

   **dadurch gekennzeichnet,**
   daß der zylindrische Körper (ZK) auf einer Länge zwischen 3 und 20 m, vorzugsweise etwa um 10 m von den Leitern (LE1, LE2) umschlungen wird.

3. Verfahren nach einem der vorhergehenden Ansprüche,

   **dadurch gekennzeichnet,**
   daß der zylindrische Körper (ZK) im Zeitpunkt der maximalen Verseilung mindestens 10 mal von den Leitern (LE1, LE2) umschlungen wird.

4. Verfahren nach einem der vorhergehenden Ansprüche,

   **dadurch gekennzeichnet**,
   daß die Zugspannung so groß gewählt wird, daß es bei der Verseilung zu keiner unzulässigen radialen Auslenkung des zylindrischen Körpers (ZK) kommt.

5. Verfahren nach einem der vorhergehenden Ansprüche,

**dadurch gekennzeichnet**,
daß die Leiter am Anfang des zylindrischen Körpers (ZK) durch eine Führungsscheibe (FS) hindurchbewegt werden.

6. Einrichtung zur Durchführung des Verfahrens nach einem der vorhergehenden Ansprüche, wobei der zylindrische Körper (ZK) an beiden Enden in axialer Richtung unverschiebbar jedoch rotierbar gelagert ist, und daß mindestens an einem Ende Mittel (FE) zur Erzeugung einer axialen Vorspannung vorgesehen sind,

**dadurch gekennzeichnet**,
daß der zylindrische Körper (ZK) aus einem Draht oder Seil besteht, und
daß für den zylindrischen Körper (ZK) beidseitig Antriebe (M01, M02) vorgesehen sind, die den zylindrischen Körper /ZK) taktgleich mit unterschiedlichen Drehzahlen antreiben, so daß für den zylindrischen Körper (ZK) eine Torsion bewirkt und die Reversierung der Verseilscheibe (VS) beschleunigt ist.

7. Einrichtung nach Anspruch 6,

**dadurch gekennzeichnet**,
daß im Verlauf des zylindrischen Körpers (ZK) mindestens ein Führungsring (FR1) für die Begrenzung einer radialen Auslenkung bzw. gegen das Abheben der Leiter vorgesehen ist.

8. Einrichtung nach einem der Ansprüche 6 oder 7,

**dadurch gekennzeichnet**,
daß die Verseilscheibe (VS) mit dem zylindrischen Körper (ZK) fest verbunden ist und daß eine Antriebseinrichtung (M01) im Bereich der Verseilscheibe (VS) vorgesehen ist.

9. Einrichtung nach einem der Ansprüche 6 mit 8,

**dadurch gekennzeichnet**,
daß in Durchlaufrichtung am Eingang des zylindrischen Körpers (ZK) eine feststehende Führungsscheibe (FS) vorgesehen ist.

10. Einrichtung nach einem der Ansprüche 6 mit 9,

**dadurch gekennzeichnet**,
daß am einlaufseitigen Ende des zylindrischen Körpers (ZK) eine Antriebseinrichtung (M01) vorgesehen ist.

11. Einrichtung nach einem der Ansprüche 6 mit 10,

**dadurch gekennzeichnet**,
daß der zylindrische Körper (ZK) aus einem als Torsionsfeder wirkenden Material besteht.

12. Einrichtung nach einem der Ansprüche 6 mit 11,

**dadurch gekennzeichnet**,
daß der zylindrische Körper (ZK) eine Länge zwischen 2 und 20 m aufweist.

13. Einrichtung nach einem der Ansprüche 6 mit 12,

**dadurch gekennzeichnet**,
daß der zylindrische Körper (ZK) aus Vollmaterial besteht.

## Claims

1. Process for stranding electrical and/or optical conductors (LE1, LE2) with changing direction of lay (SZ stranding) using an elongated cylindrical body (ZK) which is operated with changing direction of rotation and around which the conductors (LE1, LE2) are wrapped and are fed at the end to a stranding disc (VS), the cylindrical body (ZK) being held under tension at the end during the stranding process, characterized in that a wire or cable is used as cylindrical body (ZK), in that the cylindrical body (ZK) is driven at both ends with drives (M01, M02), and in that these end drives (M01, M02) are synchronously operated at different rates of rotation, so that the cylindrical body (ZK) is operated as a torsion spring and the reversing of the stranding disc (VS) is accelerated as a result of the spring torsion.

2. Process according to Claim 1, characterized in that the cylindrical body (ZK) is wrapped around by the conductors (LE1, LE2) over a length between 3 and 20 m, preferably about 10 m.

3. Process according to one of the preceding claims, characterized in that the cylindrical body (ZK) is wrapped around at least 10 times by the conductors (LE1, LE2) at the time of maximum stranding.

4. Process according to one of the preceding claims, characterized in that the tension is selected to be so great that no impermissible radial deflection of the cylindrical body (ZK) occurs during stranding.

5. Process according to one of the preceding claims, characterized in that, at the beginning of the cylindrical body (ZK), the conductors are moved through a guide disc (FS).

6. Device for carrying out the process according to one of the preceding claims, the cylindrical body (ZK) being supported at both ends so as to be undisplaceable in the axial direction but rotatable, and means (FE) for producing an axial prestress being provided at least at one end, characterized in that the cylindrical body (ZK) comprises a wire or cable, and in that drives (M01, M02) are provided at both ends for the cylindrical body (ZK), which drive the cylindrical body (ZK) synchronously at different rates of rotation, so that a torsion of the cylindrical body (ZK) is effected and the reversing of the stranding disc (VS) is accelerated.

7. Device according to Claim 6, characterized in that, in the course of the cylindrical body (ZK), at least one guide ring (FR1) is provided to limit a radial deflection or to counter lifting off of the conductors.

8. Device according to one of Claims 6 or 7, characterized in that the stranding disc (VS) is firmly fixed to the cylindrical body (ZK), and in that a drive device (M01) is provided in the region of the stranding disc (VS).

9. Device according to one of Claims 6 to 8, characterized in that a stationary guide disc (FS) is provided in the passage direction at the inlet of the cylindrical body (ZK).

10. Device according to one of Claims 6 to 9, characterized in that a drive device (M01) is provided at the inlet end of the cylindrical body (ZK).

11. Device according to one of Claims 6 to 10, characterized in that the cylindrical body (ZK) consists of a material acting as a torsion spring.

12. Device according to one of Claims 6 to 11, characterized in that the cylindrical body (ZK) has a length between 2 and 20 m.

13. Device according to one of Claims 6 to 12, characterized in that the cylindrical body (ZK) consists of solid material.

## Revendications

1. Procédé de câblage de conducteurs électriques et/ou optiques (LE1,LE2) avec un sens de câblage alterné (câblage SZ) moyennant l'utilisation d'un corps cylindrique allongé (ZK), qui est entraîné dans des sens de rotation alternés et qui est entouré par les conducteurs (LE1,LE2), qui sont envoyés, côté extrémité, à une plaque de répartition (VS), le corps cylindrique (ZK) étant maintenu, au niveau de son extrémité, sous une contrainte de traction pendant l'opération de câblage, caractérisé par le fait

qu'on utilise comme corps cylindrique (ZK) un fil ou un câble, que le corps cylindrique (ZK) est entraîné des deux côtés par des dispositifs d'entraînement (M01, M02), que ces dispositifs d'entraînement (M01,M02) situés aux extrémités sont entraînés en synchronisme avec des vitesses de rotation différentes, de sorte que le corps cylindrique (ZK) fonctionne en tant que ressort de torsion et que l'inversion de marche de la plaque de répartition (VS) est accélérée par le ressort de torsion.

2. Procédé suivant la revendication 1, caractérisé par le fait que le corps cylindrique (ZK) est entouré, sur une longueur comprise entre 3 et 20 m et égale de préférence à environ 10 m, par les conducteurs (LE1,LE2)

3. Procédé suivant l'une des revendications précédentes, caractérisé par le fait que le corps cylindrique (ZK) est entouré au moins 10 fois par les conducteurs (LE1, LE2), à l'instant du câblage maximum.

4. Procédé suivant l'une des revendications précédentes, caractérisé par le fait que la contrainte de traction est choisie suffisamment élevée pour qu'aucune déviation radiale inadmissible du corps cylindrique (ZK) ne se produise lors du câblage.

5. Procédé suivant l'une des revendications précédentes, caractérisé par le fait qu'au début du corps cylindrique (ZK), les conducteurs sont déplacés à travers un disque de guidage (FS).

6. Dispositif pour la mise en oeuvre du procédé suivant l'une des revendications précédentes, dans lequel le corps cylindrique (ZK) est monté, à ses deux extrémités, de manière à être immobile dans la direction axiale, tout en pouvant tourner, et que des moyens (FE) pour produire une précontrainte axiale sont prévus au moins à une extrémité,

caractérisé par le fait
que le corps cylindrique (ZK) est constitué par un fil ou un câble, et
que pour le corps cylindrique (ZK), il est prévu, des deux côtés, un dispositif d'entraînement (M01,M02), qui entraîne le corps cylindrique (ZK) en synchronisme avec des vitesses de rotation différentes de sorte qu'une torsion est produite pour le corps cylindrique (ZK) et que l'inversion de marche de la plaque de répartition (VS) est accélérée.

7. Dispositif suivant la revendication 6, caractérisé par le fait que sur l'étendue du corps cylindrique (ZK) est prévue au moins une bague de guidage (FR1) servant à limiter une déviation radiale ou empêcher un écartement des conducteurs.

8. Dispositif suivant l'une des revendications 6 ou 7, caractérisé par le fait que la plaque de répartition (VS) est reliée de façon fixe au corps cylindrique (ZK) et qu'un dispositif d'entraînement (M0) est prévu dans la zone de la plaque de répartition (VS).

9. Dispositif suivant l'une des revendications 6 à 8, caractérisé par le fait qu'un disque fixe de guidage (FS) est prévu dans la direction de déplacement à l'entrée du corps cylindrique (ZK).

10. Dispositif suivant l'une des revendications 6 à 9, caractérisé par le fait qu'un dispositif d'entraînement (M01) est prévu à l'extrémité, située côté entrée, du corps cylindrique (ZK).

11. Dispositif suivant l'une des revendications 6 à 10, caractérisé par le fait que le corps cylindrique (ZK) est constitué par un matériau agissant en tant que ressort de torsion.

12. Dispositif suivant l'une des revendications 6 à 11, caractérisé par le fait que le corps cylindrique creux (ZK) possède une longueur comprise entre 2 et 20 m.

13. Dispositif suivant l'une des revendications 6 à 12, caractérisé par le fait que le corps cylindrique (ZK) est réalisé en un matériau massif.

FIG 1

FIG 2

9